# EUROPÄISCHE PATENTANMELDUNG

(11) **EP 4 667 993 A1**
(43) Veröffentlichungstag der Anmeldung: **24.12.2025**
(21) Anmeldenummer: 25184130.0
(22) Anmeldetag: 20.06.2025
(51) Int. Cl.: G02B 7/02, G03B 17/12, H04N 23/51, H04N 23/55

(54) **KAMERA**

(30) Priorität: 21.06.2024 DE 102024117597
(71) Anmelder: Proton Camera Innovations GmbH, 30827 Garbsen (DE)
(72) Erfinder: Höpken, Marko, 31535 Neustadt am Rübenberge (DE)
(74) Vertreter: Gerstein, Hans Joachim

(57) **Zusammenfassung**

Eine Kamera (1) mit einem Kameragehäuse (2) wird beschrieben, das einen Objektivaufnahme mit einem Rohrstutzen (3) und einem Innengewinde (4) an dem Rohrstutzen (3) hat. Der Rohrstutzen (3) weist eine am Innenumfang des Rohrstutzens (3) umlaufende erste Umfangsnut (5a) mit einem elastischen O-Ring (7a) in der Umfangsnut (5a) auf. Der Rohrstutzen (3) hat am Innenumfang des Rohrstutzens (3) mindestens zwei Umlaufnuten (5b), die in Erstreckungsrichtung des Rohrstutzens (3) beabstandet von der ersten Umfangsnut (5a) auf einer gemeinsamen optischen Achse (OA) angeordnet ist und einen elastischen O-Ring (7b) in der zweiten Umfangsnut (5b) aufweist.

## Beschreibung

Die Erfindung betrifft eine Kamera mit einem Kameragehäuse, das eine Objektivaufnahme mit einem Rohrstutzen und einem Innengewinde an dem Rohrstutzen hat, wobei der Rohrstutzen eine am Innenumfang des Rohrstutzens umlaufende erste Umfangsnut mit einem elastischen O-Ring in der Umfangsnut aufweist.

Herkömmliche Kameras haben entweder ein fest in das Kameragehäuse eingebautes Objektiv oder einen Objektivadapter, an den ein separates Objektiv auswechselbar montiert werden kann. Objektive umfassen eine Anordnung von optischen Linsen, mit denen die Aufnahmecharakteristik der Kamera bestimmt wird. Ein Objektiv erzeugt eine reelle optische Abbildung eines aufzunehmenden Objektes durch Sammlung der Lichtstrahlen. So können beispielsweise durch Weitwinkel-, Normal-, Tele-, Zoom- oder Fischaugenobjektive verschiedene Bildwinkel aufgenommen werden. Mit Filterscheiben an oder in Objektiven lassen sich auch bestimmte Farbspektren filtern, entweder als Durchlass- oder als Sperrfilter. Durch die Brennweite des Objektivs kann die Größe der Bildabbildung und der Fokus festgelegt werden. Die Bildcharakteristiken können mit einem einstellbaren Objektiv bedarfsweise variiert werden.

Die herkömmlichen Objektivaufnahmen können als Bajonettverschluss oder als Gewindeanschluss ausgeführt werden. Die Gewindeanschlüsse werden als Feingewinde realisiert, die eine genaue Fokus-Einstellung ermöglichen. Der Fokus wird durch das ein- oder ausschrauben der Linse erreicht, wobei es keinen festen "Backfokus" gibt. Der Fokus hängt von dem Objektiv und dem Objektabstand ab und ist von der Einschraubtiefe des Objektivs in die Objektivaufnahme abhängig. Das Objektiv wird bei variabler Einstellung nicht bis zu einem Endanschlag eingeschraubt und muss daher gesichert werden, um eine Verstellung des Fokus und ein Herausfallen des Objektivs im Betrieb und ein Verkippen der Linse zu verhindern. Das Verkippen der Lise führt zu einer Bildverzerrung und zu einem nicht zentrierten Bild.

Zur Sicherung des Objektivs sind Kontermuttern oder Konterringe auf dem Objektiv bekannt, die sehr klein und damit schlecht einstellbar sind.

Es kann auch ein Federdruck von der Objektivseite, z.B. mit einer Sprungfeder, auf die Linse ausgeübt werden. Dabei ist aber für jedes Objektiv eine spezielle Federlänge erforderlich und es kann keine stabile Sicherung des Objektivs gewährleistet werden.

Das Objektiv kann auch von der Seite mit einer Klemmschraube gesichert werden. Dies kann aber zu einer Beschädigung des Objektivgewindes führen und der Fokus kann sich beim Festschrauben verstellen.

Die Fixierung kann auch mit untermaßigen flexiblen Kunststoffaufnahmen erfolgen, mit denen eine Klemmung durch Passung erreicht wird. Dabei können Harze eingesetzt werden, die ein Verstellen verhindern. Die Kunststoffaufnahmen sind jedoch bei hohen Temperaturdifferenzen und Verschmutzungen problematisch.

Denkbar ist auch ein Verkleben des Objektivs, was nachteilig aber keine weitere Einstellung des Fokus mehr ermöglicht.

Eine Fixierung kann auch mit einem Gummiring im Gewinde erfolgen, die das Objektiv durch ihre Elastizität sichert. Das Objektiv kann dabei nachteilig verkippen.

DE 29 43 003 A1 schlägt zur Verbesserung einer mit einem O-Ring ausgestatteten gattungsgemäßen Kamera eine wasserdichte Dichtungsanordnung für Kameras vor, bei der im äußeren Ende der Öffnung eine Stufe ausgebildet ist und ein weiches Bauteil in Form einer kurzen Hülse mit der Stufe fest verbunden und mit seiner Innenumfangsfläche und seiner oberen Endfläche an einer drehbaren Schaftanordnung in satter Anlage gehalten ist.

US 5,177,515 A beschreibt eine wasserdichte Kamera, bei der ein wasserdichter äußerer Zylinder eines Objektivs mit seinem Außengewinde in das Innengewinde eines Objektivanschlusses eingeschraubt ist, wobei ein erster O-Ring in Schraubrichtung vor dem Außengewinde auf dem Außenumfang des äußeren Zylinders angeordnet ist. Weiterhin hat die Kamera einen Inneren Befestigungsflansch, der mit einem zweiten O-Ring dicht mit dem Kameragehäuse verbunden wird.

Aufgabe der vorliegenden Erfindung ist es, eine verbesserte Kamera zu schaffen.

Die Aufgabe wird mit der Kamera mit den Merkmalen des Anspruchs 1 gelöst. Vorteilhafte Ausführungsformen sind in den Unteransprüchen beschrieben.

Es wird vorgeschlagen, dass der Rohrstutzen am Innenumfang des Rohrstutzens eine zweite umlaufende Umfangsnut hat, die in Erstreckungsrichtung des Rohrstutzens beabstandet von der ersten Umfangsnut ist und einen elastischen O-Ring in der zweiten Umfangsnut aufweist.

Damit wird das Objektiv durch die Elastizität der in einer Flucht der optischen Achse angeordneten O-Ringe im Gewindegang fixiert und durch die mindestens zwei hintereinander angeordneten O-Ringe zugleich vor Verkippen gesichert. Zudem wird eine Redundanz der Abdichtung bereitgestellt und die Gefahr des Eindringens von Feuchtigkeit in den Innenraum des Kameragehäuses damit weiter reduziert.

Die Kamera kann vorzugsweise eine Digitalkamera sein, welche einen Bildaufnahmesensor in dem Kameragehäuse und eine an dem Bildaufnahmesensor angeschlossene Bildaufnahmeelektronik aufweist.

Das Innengewinde kann in Erstreckungsrichtung des Rohrstutzens in mehrere Segmente aufgeteilt sein.

Im Übergang von zwei aneinander angrenzenden Segmenten kann eine Umfangsnut angeordnet sein. Damit führt der in der Umfangsnut angeordnete elastische O-Ring das segmentierte Gewinde fort, wobei das Außengewinde des Objektiv von einem Gewindesegment form- und reibschlüssig durch den elastischen O-Ring hindurch mit dem sich an den O-Ring anschließenden weiteren Gewindesegment verschraubt wird. Dies stellt eine dichte und mechanisch spielfrei verschraubte Befestigung des Objektivs an dem Kameragehäuse in der koaxialen Ausrichtung der Gewindesegmente ohne die Gefahr eines Verkippens sicher.

Die Umfangsnuten im Rohrstutzen der Objektivaufnahme mit den darin eingebrachten O-Ringen bilden dabei die Trennbereiche der aufeinanderfolgenden Gewindegang-Segmente.

Somit kann sich das Innengewinde beidseits an die erste Umfangsnut und beidseits an die zweite Umfangsnut anschließt.

Damit kann ein passendes, nicht besonders zur Abdichtung ausgebildetes Objektiv zentriert durch das Innengewinde in den Rohrstutzen der Kamera, d.h. die Objektivhalterung, eingeschraubt und dabei zuverlässig dicht mit den O-Ringen abgedichtet werden. Die O-Ringe werden beim Einschrauben durch die Anordnung der Umfangsnuten zwischen den Verlauf des Innengewindes nicht beschädigt. Die Dichtung im Innengewinde erlaubt den Einsatz jeder passenden Schraublinse und führt zu einer Kostenreduktion, das handelsübliche Objektive verwendet werden können.

Das Gewinde kann beispielsweise ein M6, M7, M8, M9, M10, M12, M13, M14 oder M17-Feingewinde sein.

Der Rohrstutzen kann an seinem Innenumfang mehr als zwei umlaufende Umfangsnuten haben, die in Erstreckungsrichtung des Rohrstutzens voneinander beabstandet sind, wobei die Umfangsnuten ein in Erstreckungsrichtung durchgehendes Innengewinde des Rohrstutzens segmentieren. Damit wird die koaxiale Sicherung des Objektivs auf der durch die Längsachse des Rohrstutzens mit seinem Innengewinde weiter verbessert, indem das Objektiv an zwei oder mehr im Abstand hintereinander konzentrisch in den jeweiligen Umfangsnuten angeordneten O-Ringen elastisch durch Reibschluss festgelegt wird.

Die Erfindung wird nachfolgend anhand eines Ausführungsbeispiels beispielhaft näher erläutert. Es zeigen:
- Fig. 1 -: perspektivische Skizze einer Kamera mit einem Kameragehäuse und einer rohrstutzenförmigen Objektivaufnahme;
- Fig. 2 -: Seitenschnittansicht der rohrstutzenförmigen Objektivaufnahme mit eingeschraubtem Objektiv und Sicherung mit mehreren O-Ringen;
- Fig. 3 -: perspektivische Ansicht einer Miniaturkamera mit rohförmiger Objektivaufnahme.

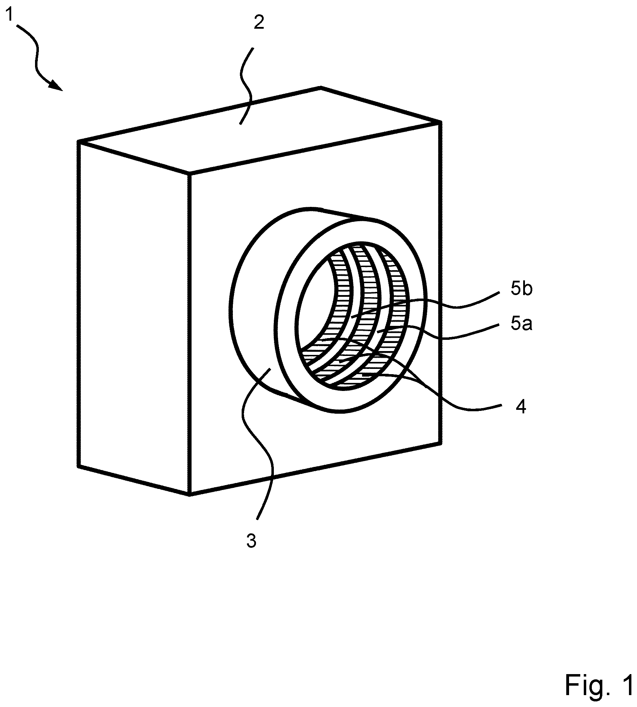

Figur 1 zeigt eine perspektivische Skizze einer Kamera 1 mit einem Kameragehäuse 2 und einer Objektivaufnahme, die aus einem Rohrstutzen 3 gebildet ist. Der Rohrstutzen 3 ist mit dem Kameragehäuse 2 verbunden. Er kann beispielsweise integral mit dem Kameragehäuse ausgebildet oder als separates Teil an dem Kameragehäuse 2 befestigt sein.

Der Rohrstutzen 3 hat an seiner zylinderförmigen Innenwand ein Innengewinde 4 und zwei Umfangsnuten 5a, 5b, in die jeweils ein elastischer O-Ring bspw. aus einem Gummimaterial eingelegt werden kann.

Das mit seinem Gewindegang kontinuierlich durchgehende Innengewinde 4 wird durch die Umfangsnuten 5a, 5b unterbrochen und auf diese Weise in drei Segmente aufgeteilt.

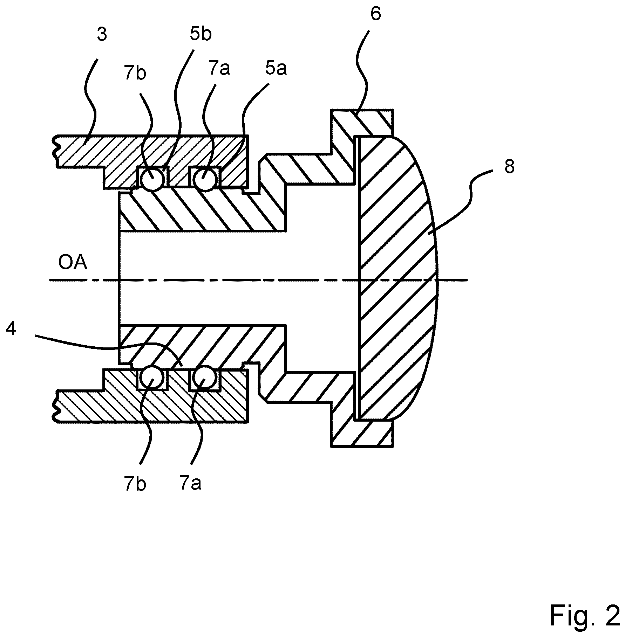

Figur 2 zeigt eine Seitenschnittansicht des Rohrstutzens 3 der Objektivaufnahme mit einem in ein Innengewinde 4 des Rohrstutzens 3 eingeschraubten Objektiv 6. Es ist erkennbar, dass in Erstreckungsrichtung des Rohrstutzens 3, der konzentrisch auf einer optischen Achse OA angeordnet ist bzw. diese bildet, zwei Umfangsnuten 5a, 5b in der Innenwand des Rohrstutzens 3 vorhanden sind. Diese sind umlaufend über den Innenumfang des zylinderförmigen Rohrstutzens 3 ausgebildet, In die Umfangsnuten 5a, 5b ist jeweils ein elastischer O-Ring 7a, 7b eingelegt. Die O-Ringe 7a, 7b können beispielsweise aus einem Gummimaterial gebildet sein. Die dienen der Sicherung des in das Innengewinde 4 eingeschraubten Objektivs 6 durch die reibschlüssige Fixierung mit den elastischen O-Ringen 7a, 7b. Dadurch, dass die Umfangsnuten 5a, 5b und damit die O-Ringe 7a, 7b auf der optischen Achse OA im Abstand voneinander angeordnet sind, wird das Objektiv 6 auf der optischen Achse OA zentriert und vor einem Verkippen gesichert. Weiterhin wird das Objektiv 6 redundant an zwei voneinander beabstandeten Halteflächen vor einem Verdrehen an dem Innengewinde 4 und damit vor einem Verschieben in Erstreckungsrichtung der optischen Achse OA gesichert. Ein Einschrauben des Objektivs 6 und eine Einstellung des von der Einschraubtiefe abhängigen Fokus bleibt nach wie vor möglich. Dabei muss nur die Reibkraft der O-Ringe 7a, 7b überwunden werden.

In dem dargestellten Ausführungsbeispiel hat das Objektiv 6 eine Linse 8. Es ist aber auch ein Linsensystem mit mehreren Linsen 8 denkbar. Das Objektiv 6 kann aber auch andere optische Elemente tragen, wie z.B. Filterscheiben und dergleichen. Diese können alternativ oder zusätzlich zu der Linse 8 vorhanden sein.

Denkbar ist dabei eine Kamera 1 mit einer aus Richtung eines Bildsensors gesehen vor der Objektivaufnahme fest eingebauter Linse 8, wobei das Objektiv 6 dann zum Tragen zusätzlicher optischer Elemente ausgewählt aus der Gruppe von Linsen 8, Filtern, Gittern, Blenden, Kondensoren, diffraktiven optischen Elementen und dergleichen ausgebildet ist.

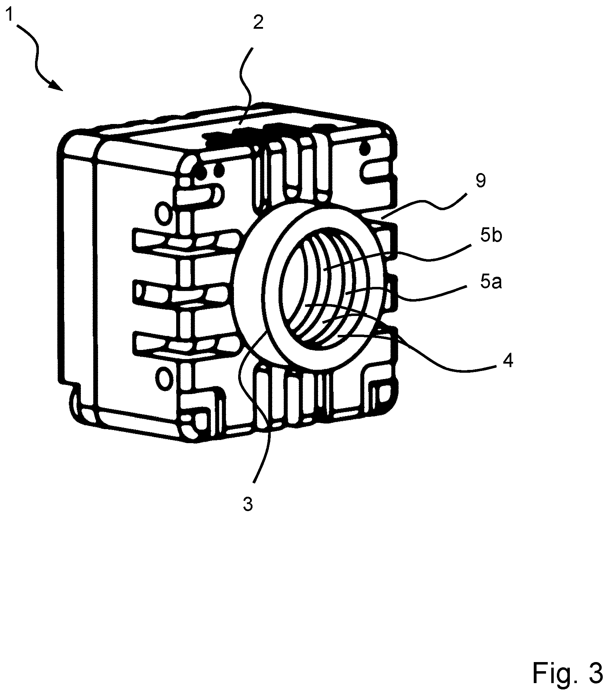

Figur 3 zeigt eine perspektivische Ansicht einer Miniaturkamera 1 mit einer aus einem Rohrstutzen 3 gebildeten Objektivaufnahme. Es ist erkennbar, dass das mit seinen Gewindegängen durchgehende Innengewinde 4 durch zwei im Abstand voneinander an der Innenwand des Rohrstutzens 3 eingebrachten umfangsseitig umlaufenden Umfangsnuten 5a, 5b in drei Gewinde-Segmente unterteilt ist.

Das Kameragehäuse 2 kann Kühlrippen 9 an seiner Außenfläche haben, um die beim Betrieb der Kameraelektronik anfallende Wärme abzuführen. Damit kann auch die Temperaturempfindlichkeit der Befestigung des Objektivs 6 an der Objektivaufnahme reduziert werden.

### Bezugszeichenliste

- 1: Kamera
- 2: Kameragehäuse
- 3: Rohrstutzen
- 4: Innengewinde
- 5a, 5b: Umfangsnuten
- 6: Objektiv
- 7a, 7b: O-Ringe
- 8: Linse
- 9: Kühlrippen

- OA: optische Achse

## Patentansprüche

1. Kamera (1) mit einem Kameragehäuse (2), das einen Objektivaufnahme mit einem Rohrstutzen (3) und einem Innengewinde (4) an dem Rohrstutzen (3) hat, wobei der Rohrstutzen (3) eine am Innenumfang des Rohrstutzens (3) umlaufende erste Umfangsnut (5a) mit einem elastischen O-Ring (7a) in der Umfangsnut (5a) aufweist, **dadurch gekennzeichnet, dass** der Rohrstutzen (3) am Innenumfang des Rohrstutzens (3) eine zweite umlaufende Umfangsnut (5b) hat, die in Erstreckungsrichtung des Rohrstutzens (3) beabstandet von der ersten Umfangsnut (5a) auf einer gemeinsamen optischen Achse (OA) angeordnet ist und einen elastischen O-Ring (7b) in der zweiten Umfangsnut (5b) aufweist.

2. Kamera (1) nach Anspruch 1, **dadurch gekennzeichnet, dass** das Innengewinde (4) in Erstreckungsrichtung des Rohrstutzens (3) auf der optischen Achse (OA) in mehrere Segmente aufgeteilt ist.

3. Kamera (1) nach Anspruch 1, **dadurch gekennzeichnet, dass** im Übergang von zwei aneinander angrenzenden Segmenten jeweils eine der Umfangsnuten (5a, 5b) angeordnet ist.

4. Kamera (1) nach einem der vorhergehenden Ansprüche, **dadurch gekennzeichnet, dass** Innengewinde (4) ein M6, M7, M8, M9, M10, M12, M13, M14 oder M17-Feingewinde ist.

5. Kamera (1) nach einem der vorhergehenden Ansprüche, **dadurch gekennzeichnet, dass** der Rohrstutzen (3) an seinem Innenumfang zwei oder mehr umlaufende Umfangsnuten (5a, 5b, ...) hat, die in Erstreckungsrichtung des Rohrstutzens (3) auf der optischen Achse (OA) voneinander beabstandet sind, wobei die Umfangsnuten (5a, 5b, ...) ein in Erstreckungsrichtung durchgehendes Innengewinde (4) des Rohrstutzens (3) segmentieren.

6. Kamera (1) nach einem der vorhergehenden Ansprüche, **dadurch gekennzeichnet, dass** sich das Innengewinde (4) beidseits an die erste Umfangsnut (5a) und beidseits an die zweite Umfangsnut (5b) anschließt.
